## Europäisches Patentamt
## European Patent Office
## Office européen des brevets

(19)

(11) Veröffentlichungsnummer: **0 094 618**
**B1**

(12) **EUROPÄISCHE PATENTSCHRIFT**

(45) Veröffentlichungstag der Patentschrift: **22.11.90**

(51) Int. Cl.⁵: **A 01 K 5/02**

(21) Anmeldenummer: **83104659.4**

(22) Anmeldetag: **11.05.83**

(54) **Fütterungsverfahren für Tiere, insbesondere für Schweine.**

(30) Priorität: **15.05.82 DE 3218438**

(43) Veröffentlichungstag der Anmeldung:
**23.11.83 Patentblatt 83/47**

(45) Bekanntmachung des Hinweises auf die
Patenterteilung:
**22.11.90 Patentblatt 90/47**

(84) Benannte Vertragsstaaten:
**BE DE FR GB IT NL SE**

(56) Entgegenhaltungen:
**DE-A-2 536 365**
**DE-A-2 620 686**
**US-A-3 553 441**
**US-A-4 049 950**

(73) Patentinhaber: **Hölscher & Leuschner GmbH & Co.**
**Siemensstrasse 15**
**D-4448 Emsbüren (DE)**

(72) Erfinder: **Leuschner, Peter, Dipl.-Ing.**
**Lange Strasse 2**
**D-4448 Emsbüren (DE)**

(74) Vertreter: **Busse & Busse Patentanwälte**
**Postfach 1226 Grosshandelsring 6**
**D-4500 Osnabrück (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Fütterungsverfahren nach dem Oberbegriff des Anspruchs 1.

In der Tierhaltung haben die Bemühungen um eine wissenschaftlich und technisch dem industriellen Standard entsprechende Arbeitsweise in der jüngeren Zeit zu einer weit fortschreitenden Entwicklung geführt. Insbesondere ist es gelungen, die traditionell starken Unregelmäßigkeiten, Wettereinflüssen und Störungen ausgesetzte Tierhaltung in weitgehend kontrollierte Zustände zu überführen. Sollwerte hierfür haben sich aus wissenschaftlichen Untersuchungen ergeben und werden auch laufend ergänzt und korrigiert. Solche Werte können aber immer nur grobe Anhaltspunkte für eine günstige Tierhaltung sein.

In der DE-A-2 536 365 ist ein Verfahren zur kontrollierten Futterzuteilung insbesondere für Jungvieh-Gruppen erläutert, bei der jedes Tier seinen eigenen Trog hat und das Futter darin so langsam zugeteilt erhält, wie es das am langsamsten fressende Tier einer Gruppe aufnimmt. Dadurch sollen die Freßgeschwindigkeiten der Tiere, die sich insbesondere durch Futterneid ungleichmäßig entwickeln, aneinander angeglichen und werden, so daß sich auch die Aufenthaltszeiten der Tiere in einer Box bis zur Schlachtreife aneinander angleichen und die Boxen damit gut ausgenutzt werden können. Die zugeteilten Futtermengen können dabei von Mal zu Mal oder von Tag zu Tag variiert werden. Die Futtermenge wird hierbei entsprechend dem physiologischen Alter der Tiere (Lebendgewicht) berechnet.

Aus der DE-A- 26 20 686 ist eine Einrichtung zum automatischen Füttern von Tieren mit Naßfutter bekannt, die jedem Tier Futter nur für eine begrenzte Zeiteinheit zur Verfügung stellt. Mit dieser Art vereinheitlichter Freßzeiten hofft man, eine optimale Futteraufnahme zu erreichen.

Diesen Zielvorstellungen nach einer normierten Freßgeschwindigkeit oder Freßzeit steht die Beobachtung entgegen, daß Tiere in ihren Anlagen sehr unterschiedlich sein können und daß eine Optimierung der tierischen Leistung, wie der Gewichtszunahme, der Legeleistung oder der Milchleistung von Tieren nur durch Berücksichtigung individueller Werte möglich ist.

Aufgabe der Erfindung ist es dementsprechend, ein Verfahren zu schaffen, das die Fütterung von Tieren unter Berücksichtigung des verhaltens des Einzeltieres auf eine zuverlässige und meßtechnisch einfach durchzuführende Weise zu optimieren erlaubt.

Gemäß der Erfindung wird diese Aufgabe mit einem Fütterungsverfahren nach dem Anspruch 1 gelöst. Der Vorteil der erfindungsgemäßen Lösung wird anschaulich, wenn man in Betracht zieht, daß das Verhalten des Tieres ein sehr viel schnelleres und deutlicheres Behandlungsergebnis, konkret hier Fütterungsergebnis, liefert, daß damit verläßlicher und schneller zur Optimierung der Fütterung herangezogen werden kann. Dabei ist das Freßverhalten des Tieres in erster Linie aufschlußreich und wegen seiner Lokalisierbarkeit an der Futterstelle auch gut erfaßbar. Als wirkungsvoll hat sich in dieser Hinsicht erwiesen, die auf eine Sollzeit bezogene Zeit eines Tieres oder einer Tiergruppe zur Aufnahme einer vorgegebenen Futtermenge als Maßstab für das Freßverhalten zu nehmen und eine Optimierung der Futtermenge, Futterzusammensetzung und/oder Futterhäufigkeit auf eine feste Sollzeit vorzusehen, d. h. bei schnellerer Aufnahme der Futtermenge die Futtermenge zu erhöhen und umgekehrt.

Weitere Vorteile der Erfindung ergeben sich aus der nachfolgenden Beschreibung, in der ein Ausführungsbeispiel des Gegenstands der Erfindung anhand einer Zeichnung näher erläutert ist. In der Zeichnung zeigen:

Fig. 1 schematische Darstellung einer Fütterungseinrichtung und

Fig. 2 Blockschaltbild zur Fütterungseinrichtung nach Fig. 1.

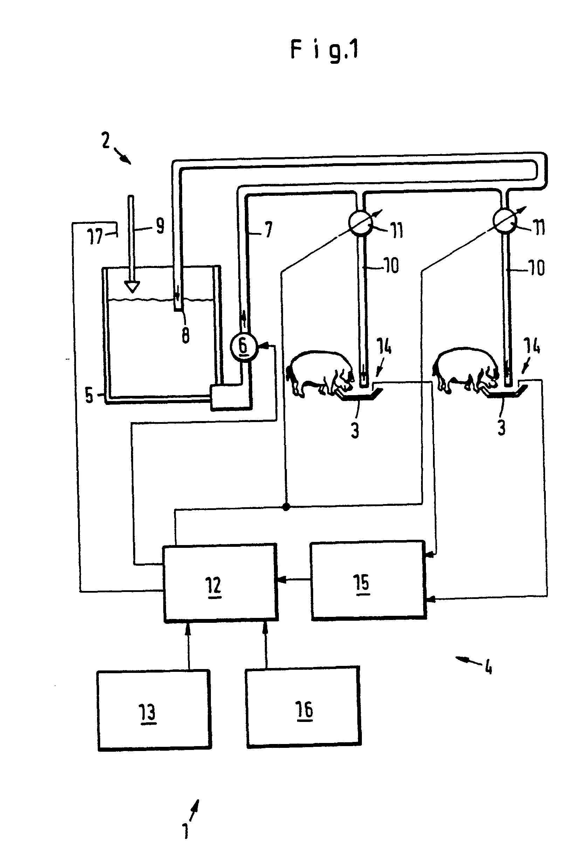

Die in Fig. 1 dargestellte, insgesamt mit 1 bezeichnete Fütterungseinrichtung umfaßt einen Futterzuteiler 2, zwei Tröge 3 und eine elektronische Steuerung 4.

Der Futterzuteiler 2 umfaßt einen Futtermischbehälter 5, von dem aus über eine pumpe 6 eine Futterleitung 7 ausgeht und als Ringleitung mit einem Ende 8 auch wieder einmündet. Weiterhin mündet in den Futtermischbehälter 5 zumindest eine Zuführung 9 für Futterkomponenten ein.

Die Futterleitung 7 weist zu den Trögen 3 Zweigleitungen 10 auf, die jeweils über ein Futterventil 11 angeschlossen sind. Der Weg des Futters geht bekanntermaßen von Komponenten aus, die in den Futtermischbehälter eingegeben und gemischt werden, über die Futterleitung 7, dosiert über die Futterventile 11 in die Tröge 3 hinein, von wo sie von den Tieren aufgenommen werden sollen. Die Zeichnung stellt nur beispeilsweise ein Schwein zu jedem Trog dar, grundsätzlich gilt vorstehendes auch für andere Tiere und auch für den Besatz einer Box etwa einer Gruppe von Schweinen.

Die zugeteiltenen Mengen werden dabei bereits herkömmlich über ein Steuerungsgerät 12 vorgegeben und überwacht, welches einen Eingabeteil 13 umfaßt, mit dem die wesentlichen Daten in das Steuerungsgerät eingegeben werden können. Typischerweise sind damit aber nur feste Futtermengen vorzugeben, die nur von Hand zu ändern sind, wenn etwa die Tiere wachsen, besondere Lebensphasen durchlaufen oder aufgrund geänderter Klimawerte mehr oder weniger Appetit entwickeln.

Um eine möglichst schnelle und gute Anpassung an den Bedarf der Tiere und damit eine insgesamt gute Futterverwertung zu erzielen, ist vorgesehen, das Tierverhalten zu überwachen und im Sinne einer Anpassung an den Futterbedarf auszuwerten. Es versteht sich, daß das Tierverhalten nicht in allen Einzelheiten erfaßt und festgehalten werden soll und kann, sondern daß es darauf ankommt, möglichst repräsentative und einfach ermittelbare Werte zu erlangen.

Grundsätzlich könnte das Bewegungsverhalten, das Atemverhalten und vieles andere gemessen und in Datenform abgespeichert werden. Im vorliegenden Fall ist für die laufende Optimierung der Futterzuteilung von besonderem Interesse, das Freßverhalten des Tieres zu überwachen. In diesem Sinne ist vorgesehen, die Füllhöhe des Troges mit Hilfe von Füllhöhengebern 14 zu überwachen, was insbesondere bei dem verbreiteten Flüssigfutter ein verläßliches Maß für das im Trog (noch) vorhandene Futter darstellt.

Zur überwachung des Freßverhaltens wird z. B. vorgegeben, daß das Tier (oder eine Gruppe von Tieren in gemeinschaftlicher Boxenhaltung) den Inhalt eines Troges innerhalb von 10 Minuten zu 90% aufnehmen soll. Wird diese Aufnahmemenge innerhalb von 10 Minuten nicht erreicht, dann zeigt der Füllhöhenmesser dieses über einen Meßumformer 15 dem Steuerungsgerat 12 an und dieses sorgt dafür, daß die nächste Futterzuteilung um ein vorgegebenes prozentuales Maß geringer ausfällt. Damit folgt die Futterzuteilung dem vom Tier durch das Freßverhalten angezeigten Futterbedarf.

Um den Füllhöhengeber 14 möglichst einfach zu gestalten, könnte diesem lediglich die Überwachung einer einzigen Füllhöhe übertragen werden. Auf eine Rest-Füllhöhe abgestimmt, könnte er die 90%-ige Entleerung des Troges anzeigen, wobei die Zeit bis zu dieser Entleerung als Maß für das Freßverhalten dient.

Die dargestellte Ausführungsform sieht abweichend vor, daß der Füllhöhengeber einen zumindest im wesentlichen über die Füllhöhe des Trogs erstreckten Meßbereich umfaßt. Auf diese Weise kann auch beim Einfüllen des Futters in den Trog laufend überwacht werden, welche Füllhöhe erreicht und damit welche Futtermenge eingegeben ist. Bei Erreichen der dosierungsgemäßen Menge wird dann das zugehörige Futterventil 11 abgeschaltet. Somit kann nicht nur die Freßgeschwindigkeit, sondern auch die Dosierung mit Hilfe des Füllhöhengebers 14 erfolgen.

Der Füllhöhengeber 14 ist hier ein Ultraschallgeber, der oberhalb des Trogs angeordnet und auf den Flüssigkeitsspiegel im Trog gerichtet ist und der den Futterspiegel im Trog überwacht. Es versteht sich, daß anstelle einer Ultraschall-Laufzeitmessung eine Vielzahl bekannter Weg- oder Höhenmeßmethoden eingesetzt werden kann, wie etwa die kapazitive Messung zwischen zwei Elektroden. Es kann eine Druckmessung im Trog, insbesondere in einer Eintiefung im Trog, den füllhöhenabhängigen Flüssigkeitsdruck überwachen. Die Futtermenge im Trog kann natürlich auch durch eine Gewichtsmessung bestimmt werden, wenngleich dabei Berührungen des Troges durch das Tier zu Störungen führen.

Das Steuerungsgerät 12 ist auch mit einem Meßgerät 16 für Umweltdaten verbunden, so daß insbesondere Klimadaten und sonstige Einflüsse bei der Futterdosierung berücksichtigt werden können.

Das vorbeschriebene Prinzip der Futterzuteilung kann auch bei der Eingabe der Komponenten in den Futtermischbehälter 5 vorgesehen werden. Ein weiterer Füllhöhengeber 17 ist auf den Futterspiegel im Futtermischbehälter 5 gerichtet. Bei Eingabe der Futterkomponenten wird die Änderung der Füllhöhe überwacht und danach die Mengeneingabe der Komponenten gesteuert, wobei die zentrale Steuerung über das Steuerungsgerät technisch einfach und für die Gesamtkontrolle zweckmäßig ist.

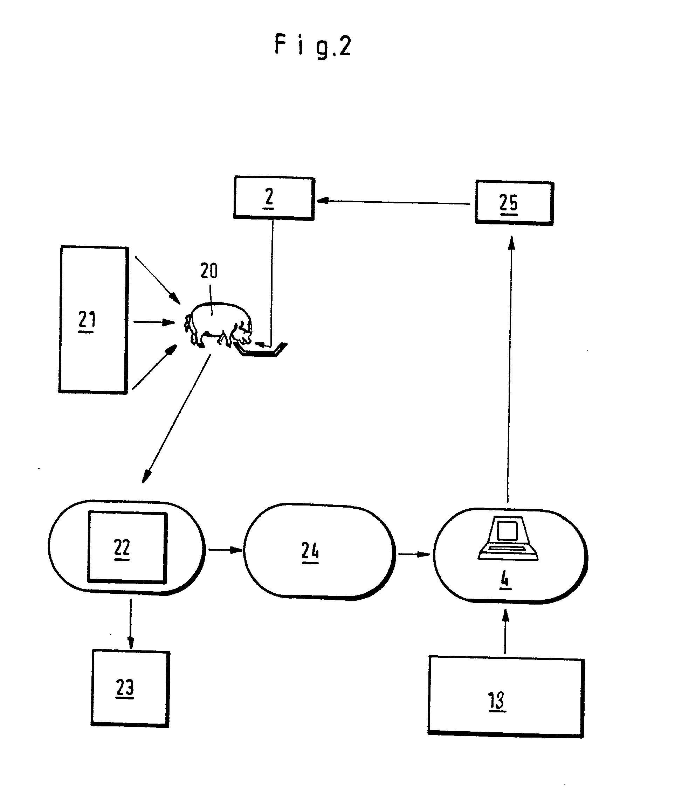

Das Fütterungsverfahren ist im Prinzip noch einmal in Fig. 2 erläutert. Das mit 20 bezeichnete Tier ist einerseits der Fütterung von einem Futterzuteiler 2 "ausgesetzt", andererseits unterliegt es verschiedenen Umweltbeeinflussungen, die durch einen schematischen Erzeuger 21 veranschaulicht ist. Das Tier verarbeitet diese Eingangsgrößen primär zu einem tierischen Verhalten 22 und sekundär zu einer tierischen Leistung 23. Da die tierische Leistung in der Regel nur geringfügigen, schwer meßbaren und nur verspätet eintretenden Änderungen unterworfen ist, geht eine meßtechnische Erfassung 24 vom tierischen Verhalten aus und gibt meßtechnische Werte für dieses in ein Steuerungsgerät 4 ein. Ein Sollwertvergleich 25 liefert dann eine vorgegebene Änderung der Futterzuteilung im Futterzuteiler 2. Ausgangswerte und Vorgabewerte für die Änderungsempfindlichkeit werden über ein Eingabegerät 13 in dieses Regelsystem eingeführt.

Die Speicherung von Daten und die Verarbeitung gespeicherter wie auch gemessener Daten macht die Verwendung von Digitalelektronik, insbesondere von Prozeßrechnern, Mikroprozessoren u. dgl. unter Kosten- wie auch unter Handhabungsgesichtspunkten angezeigt, die auch Änderungen und Ergänzungen eines Gesamtsystems aufgrund ihrer vielseitigen Verwendbarkeit erleichtern.

Dabei versteht es sich, daß die Fütterung nicht allein in der Gesamtmenge des Futters, sondern auch in ihren Bestandteilen variiert werden kann und daß schließlich auch die Fütterungszeiten und die Fütterungshäufigkeit verändert werden können.

**Patentanspruch**

Fütterungsverfahren für Tiere, insbesondere für Schweine, bei dem die Tiere durch meßtechnische Einrichtungen (14) überwacht und aufgrund laufend gemessener und gespeicherter Daten mit Futter versorgt werden, dadurch gekennzeichnet, daß die meßtechnischen Einrichtungen (14) die Aufnahmezeit für eine vorgegebene Futtermenge ermitteln und daß die Futtermenge und/oder Futterhäufigkeit erhöht bzw. erniedrigt wird, wenn die ermittelte Aufnahmezeit kürzer bzw. länger als eine vorgegebene Sollzeit ist.

**Revendication**

Procédé d'alimentation pour animaux, en particulier pour porcs, selon lequel les animaux sont surveillés à l'aide de dispositifs de mesure (14) et reçoivent leur alimentation sur base de données calculées et stockées de manière continue, caractérisé en ce que les dispositifs de mesure (14) déterminent le temps d'ingestion pour une quantité prédéterminée d'aliment et que la quantité d'aliment et/ou la fréquence de distribution d'aliment respectivement accrues ou réduites en fonction du fait que le temps d'ingestion déterminé est plus court ou plus long qu'un temps de consigne prédéterminé.

**Claim**

A feeding method for animals, particularly for pigs, wherein the animals are monitored by metrological devices (14) and are supplied with feed on the basis of continuously measured and stored data, characterised in that the metrological devices (14) ascertain the time taken to consume a given amount of feed and that the amount of feed and/or the frequency of feeding is increased or reduced if the consumption time detected is shorter or longer than a preset desired time.

# Fig.1

# F i g.2